# EUROPÄISCHE PATENTSCHRIFT

(11) **EP 1 555 073 B1**
(45) Veröffentlichungstag und Bekanntmachung des Hinweises auf die Patenterteilung: **10.02.2010**
(21) Anmeldenummer: 04027352.6
(22) Anmeldetag: 18.11.2004
(51) Int. Cl.: B22D 11/055

(54) **Flüssigkeitsgekühlte Stranggiesskokille**
Liquid cooled continuous casting mold
Lingotière de coulée continue à refroidissement liquide

(30) Priorität: 14.01.2004 DE 102004001928
(43) Veröffentlichungstag der Anmeldung: 20.07.2005
(73) Patentinhaber: KME Germany AG & Co. KG, 49074 Osnabrück (DE)
(72) Erfinder: Wobker, Hans-Günter, 49565 Bramsche (DE); Hugenschütt, Gerhard, 49191 Belm (DE); Rolf, Thomas, 49086 Osnabrück (DE); Burlager, Reinhold, 49082 Osnabrück (DE)
(74) Vertreter: Pietrzykowski, Anja

(56) Entgegenhaltungen:
- EP-A- 1 138 417
- EP-A- 1 391 256
- EP-A- 1 398 099
- DE-T1- 19 581 604
- FR-A- 2 459 093
- US-A- 3 967 673
- PATENT ABSTRACTS OF JAPAN Bd. 007, Nr. 068 (M-201), 19. März 1983 (1983-03-19) & JP 57 209749 A (MISHIMA KOUSAN KK), 23. Dezember 1982 (1982-12-23)

## Beschreibung

Die Erfindung betrifft eine flüssigkeitsgekühlte Kokille mit den Merkmalen des Oberbegriffs des Patentanspruchs 1.

Kokillenplatten oder ein Kokillenrohr aus Kupfer für den Strangguss werden üblicherweise durch Schraubverbindungen mit einer Stützkonstruktion verbunden. Die Stützkonstruktion kann ein Wasserkasten oder eine Adapterplatte sein. Aus der DE 195 81 604 T1 ist eine Stranggießform für Metalle bekannt, bei welcher eine gleichmäßig dicke Kokillenplatte oder ein Kokillenrohr aus Kupfer oder Kupfermaterial mit einer Stützplatte aus Stahl über eine Vielzahl von Bolzen verbunden ist. Infolge der thermisch bedingten Ausdehnung der Kokillenplatten oder des Kokillenrohres im Gießbetrieb kommt es insbesondere bei kurzen Bolzen zu einer nicht zu vernachlässigenden Biege- und Zugbeanspruchung der einzelnen Bolzen. Je nach Art der Befestigung der Bolzen an der Kokillenplatte bzw des Kokillenrohrs kann es bei aufgeschweißten Bolzen zu einem Ausfall der Schweißverbindung kommen oder bei eingeschraubten Bolzen zur Überbeanspruchung des Gewindes. Im Extremfall können sogar Risse in der Kokillenplatte bzw. dem Kokillenrohr auftreten. Um dies zu vermeiden, ist in der DE 195 81 604 T1 vorgesehen, die Kokillenplatte mit der Stützplatte in gleitender Anordnung miteinander zu verbolzen, so dass die Kokillenplatte oder das Kokillenrohr relativ zur Stützplatte lateral beweglich ist. Dies wird durch Einsatz gleitender Befestigungsmittel erreicht und durch eine Überdimensionierung der Durchgangsbohrungen in der Stützplatte. Eine laterale oder zweidimensionale Bewegung der Bolzen und folglich der Kokillenplatte bzw. des Kokillenrohres ist möglich. Zusätzlich zu dieser Maßnahme werden scheibenförmige Federringe vorgeschlagen, vorzugsweise in gestapelter Anordnung, um die Vorspannung des Bolzens auch bei hohen Temperaturen aufrecht zu erhalten. Die Federringe dienen dabei aus getriebetechnischer Sicht als eine Gelenkanordnung mit einem Freiheitsgrad, nämlich als Schiebesitz. Bei dieser Lösung ist es von Nachteil, dass die Verwendung stählerner Federringe eine nicht unerhebliche Haftreibung zwischen den Federelementen erzeugt. Aufgrund der Vielzahl der Kontaktflächen zwischen den Federringen sowie der Stützplatte und der Kokillenplatte bzw. dem Kokillenrohr summieren sich die Haftreibungskräfte, so dass eine spannungsfreie Relativverlagerung der Kokillenplatte/ des Kokillenrohres ausgeschlossen ist. Grundsätzlich führt jedoch die Überlagerung der thermisch und mechanisch induzierten Spannungen zu einer Erhöhung der Beanspruchung der Kokillenplatte bzw des Kokillenrohrs, was letztlich zu einem vorzeitigen Versagen und einer Reduzierung der Lebensdauer der Kokille führt.

Hiervon ausgehend liegt der Erfindung die Aufgabe zugrunde, eine flüssigkeitsgekühlte Kokille zum Stranggießen von Metallen dahingehend zu verbessern, dass eine weitgehend spannungsfreie Venagerung/Verformung der Kokillenplatte bzw. des Kokillenrohres lateral zu einer Stützkonstruktion ermöglicht wird.

Die Erfindung löst diese Aufgabe durch die Merkmale des Patentanspruchs 1. Vorteilhafte Weiterbildungen des Erfindungsgedankens sind Gegenstand der Unteransprüche.

Bei der erfindungsgemäßen Kokille ist kennzeichnend, dass die Kokillenplatte (1) bzw. das Kokillenrohr und die Stützkonstruktion klemmungsfrei von den Befestigungsbolzen (6) miteinander verbunden sind. Das heißt, zwischen der Stützkonstruktion, die z.B. ein Wasserkasten, eine Zwischen- oder Adapterplatte sein kann, und der daran befestigten Kokillenplatte (1) bzw. des Kokillenrohres ist ein Arbeitsspalt vorhanden. Die Breite dieses Arbeitsspalts (18) wird im Rahmen der Fertigungsmöglichkeiten so klein wie möglich gewählt, wobei lediglich sicherzustellen ist, dass die Kokillenplatte (1)/ das Kokillenrohr und die Stützkonstruktion (2) nicht klemmend miteinander verbunden werden. Die Kokillenplatte (1)/ das Kokillenrohr ist im Bereich des Arbeitsspalts (18) im Abstand von der Stützkonstruktion (2) angeordnet. Grundsätzlich ist vorgesehen, dass die Kokillenplatte (1)/ das Kokillenrohr lateral, das heißt im Wesentlichen parallel zur Stützkonstruktion (2) begrenzt verlagerbar ist. Dies wird durch eine Überdimensionierung der Durchgangsbohrungen in der Stützkonstruktion bzw. einer Stützplatte (2) erreicht. Wesentlich ist allerdings, dass die Kokillenplatte (1)/ das Kokillenrohr bedingt durch den Arbeitsspalt (18) klemmungsfrei in dieser Lateralbewegungsebene verlagerbar ist. Selbstverständlich ist die Breite des Arbeitsspalts (18) auch deshalb so weit es geht begrenzt, damit sich die Kokillenplatte (1)/ das Kokillenrohr nicht über einen Maximalbetrag hinaus von der Stützkonstruktion (2) abheben kann und sich nicht in Richtung des Formraums, der durch die Kokille gebildet wird, verlagern kann.

Nach Anspruch 1, ist die Einschraubtiefe durch eine Klemmhülse (12) begrenzt die zwischen dem Bolzenkopf (9) des Schraubbolzens und der Kokillenplatte (1)/ dem Kokillenrohr verspannt ist. Die Klemmhülse (12) ist ein separates Bauteil, das in seiner Länge exakt auf den gewünschten Abstand des Bolzenkopfs (9) und der Kokillenplatte (1)/dem Kokillenrohr abgestimmt ist. Der Befestigungsbolzen (6) klemmt bei dieser Anordnung lediglich die Klemmhülse (12) und nicht den die Klemmhülse (12) umgebenden Bereich der Stützkonstruktion (2).

Grundsätzlich ist es im Rahmen der Erfindung auch möglich, dass die Befestigungsbolzen(19) mit der Kokillenplatte (1)/ dem Kokillenrohr verbundene Gewindebolzen sind, das heißt die Gewindebolzen können an der Kokillenplatte (1)/dem Kokillenrohr befestigt sein, z.B. durch Verschweißen oder lösbar durch Verschrauben. Diese Gewindebolzen können an der Stützkonstruktion (2) mit Muttern gesichert werden, wobei die Muttern wiederum bis zu einem definierten Abstand zur Kokillenplatte (1)/ dem Kokillenrohr auf die Gewindebolzen schraubbar sind. Der Abstand der Mutter von der Kokillenplatte (1)/ dem Kokillenrohr kann wiederum durch eine zwischen der Kokillenplatte (1)/ dem Kokillenrohr und der Mutter verspannbare Klemmhülse (12) definiert sein. Grundsätzlich ist es im Rahmen der Erfindung auch möglich, dass der Abstand zwischen der Mutter und der Rückseite der Kokillenplatte (1)/ dem Kokillenrohr durch eine Begrenzung an dem Gewindebolzen definiert ist. Eine Begrenzung kann beispielsweise eine Andrehung an dem Gewindebolzen sein, beispielsweise in Form eines umlaufenden Kragens (11). Die Gewindebolzen müssen nicht zwingend durchgängig mit einem Gewinde versehen sein. Es kann ausreichend sein, das Gewinde nur in dem Höhenabschnitt vorzusehen, in welchem die Muttern aufgeschraubt werden sollen. Grundsätzlich können auch Schraubbolzen verwendet werden, die lediglich ein Einschraubende besitzen, wobei sich an das Einschraubende ein Anschlag (13) zur Begrenzung der Einschraubtiefe anschließt. Bei dieser Konfiguration ist eine separate Klemmhülse (12) nicht erforderlich. Im umgekehrten Fall könnten eine Mutter und eine Klemmhülse (12) eine einzige Baueinheit bilden, die dann auf einen Gewindebolzen aufgeschraubt wird.

Es ist möglich, dass sich insbesondere bei einer Ausbildung des Arbeitsspalts (18) zwischen den einander zugewandten Oberflächen (16, 17) der Kokillenplatte (1)/ des Kokillenrohrs und der Stützkonstruktion (2) kein unmittelbarer Kontakt zwischen der Kokillenplatte (19)/ dem Kokillenrohr und der Stützkonstruktion (2) vorhanden ist, da diese durchgängig zumindest durch die Breite des Arbeitsspalts (18) im Abstand zueinander angeordnet sind.

In einer bevorzugten Ausführungsform ist vorgesehen, dass der Arbeitsspalt (18) eine Breite aufweist, die kleiner ist als 2/10 mm. Vorzugsweise besitzt der Arbeitsspalt (18) eine Breite von weniger als 1/10 mm. Der Arbeitsspalt (18) ist sowohl bei Raumtemperatur vorhanden als auch während des Gießprozesses. Wird die Kokillenplatte (1)/ das Kokillenrohr durch die Klemmkräfte und den ferrostatischen Druck in der Kokille gegen die Stützkonstruktion (2) gepresst, verlagert sich der Arbeitsspalt (18) gegebenenfalls auf die der Kokillenplatte (1)/ dem Kokillenrohr abgewandte Seite der Stützkonstruktion (2), das heißt in den Bereich zwischen einem Bolzenkopf (9) bzw. einer aufgeschraubten Mutter und der Stützkonstruktion (2). Eine Klemmung erfolgt auch in diesem Fall nicht. Es ist lediglich die in Abhängigkeit von der Normalkraft auftretende Reibkraft zwischen den einander zugewandten Oberflächen (16, 17) der Kokillenplatte (1)/ dem Kokillenrohr und der Stützkonstruktion (2) zu überwinden.

Die Befestigungsbolzen (6) können Schraubbolzen sein, die bis zu einer definierten Einschraubtiefe in die Kokillenplatte (1)/ das Kokillenrohr einschraubbar sind. Diese Schraubbolzen besitzen einen Bolzenkopf (9), der als Anschlag fungiert. Um einen Arbeitsspalt (18) ausbilden zu können, ist es notwendig, dass der Bolzenkopf (9) einen Mindestabstand zur Kokillenplatte (1)/ dem Kokillenrohr nicht unterschreitet. Es ist daher ein Begrenzungsmittel vorgesehen, um die Einschraubtiefe des Schraubbolzens zu begrenzen und damit die Arbeitsspaltbreite zu definieren.

In einer weiteren Ausführungsform ist der Schraubbolzen nicht unmittelbar in die relativ weiche Kokillenplatte (1)/dem Kokillenrohr eingeschraubt, sondern in einen an der Kokillenplatte (1)/ dem Kokillenrohr befestigten Gewindeeinsatz (7). Um die Verbindung zwischen der Kokillenplatte (1)/ dem Kokillenrohr und dem Gewindeeinsatz (7) nicht zu belasten, ist vorgesehen, dass die Klemmhülse (12) unmittelbar an dem Gewindeeinsatz (7) abgestützt ist.

In einer weiteren Ausführungsform ist zwischen der Klemmhülse (12) und der Mutter bzw. dem Bolzenkopf (9) ein Federelement (10) angeordnet. Dieses Federelement (10) ist insbesondere eine Spannscheibe oder auch eine gewölbte oder gewellte Federscheibe. Sollte durch Verformung der Kokillenplatte (1) bzw. des Kokillenrohres im Gießbetrieb oder durch andere äußere Einflüsse der Arbeitsspalt (18) zwischen der Stützkonstruktion (2) und der Kokillenplatte (1)/ dem Kokillenrohr nicht gegeben sein, so wird durch das Federelement (10) eine unnachgiebige Verklemmung der Kokillenplatte (1)/ dem Kokillenrohr mit der Stützkonstruktion (2) verhindert.

Bei allen Ausführungsformen ist der Bolzenkopf (9) bzw. die Mutter im Durchmesser größer bemessen als eine Durchgangsbohrung (8) durch die Stützkonstruktion (2), damit die Kokillenplatte (1)/ das Kokillenrohr sicher lageorientiert ist. Um den Reibkoeffizienten zwischen den möglichen Anlageflächen der Kokillenplatte (1)/ dem Kokillenrohr bzw. der mit der Kokillenplatte (1)/ dem Kokillenrohr verschraubten Befestigungsbolzen (6) zu verringern ist vorgesehen, an den sich relativ zueinander verlagerbaren Flächen Gleithilfen anzuordnen. Die Gleithilfen können sowohl an der Stützkonstruktion (2) als auch an der Kokillenplatte (1)/ dem Kokillenrohr einer Klemmhülse (12) angeordnet sein. Die Gleithilfe kann insbesondere eine Beschichtung auf Basis von Polytetrafluorethylen (PTFE) sein. Auch der Einsatz von Gleitscheiben ist möglich.

Wesentlich für eine Relativbewegung zwischen der Kokillenplatte (1) bzw. dem Kokillenrohr und der Stützkonstruktion (2) im Bereich der einzelnen Anbindungen ist, dass die Befestigungsbolzen (19) bzw. die Befestigungsbolzen umgebende Klemmhülsen (12) eine solche Relativverlagerung zulassen. Die Befestigungsbolzen (19) durchsetzen grundsätzlich Durchgangsbohrungen (8) der Stützkonstruktion (2) mit hinreichendem radialem Spiel.

Als besonders vorteilhaft wird es angesehen, wenn im Rahmen der Erfindung der gewünschte Arbeitsspalt (18) dadurch aufrecht erhalten wird, dass zwischen der Kokillenplatte (1)/ dem Kokillenrohr und der Stützkonstruktion (2) ein Überdruck durch einen Kühlmittelstrom aufgebaut wird, so dass der Druck des Kühlmittels die Kokillenplatte (1)/ das Kokillenrohr von der Oberfläche der Stützkonstruktion (2) weg drückt. Selbst wenn Kühlmittel in den Arbeitsspalt (18) eindringen kann, ist der Arbeitsspalt (18) im Sinne der Erfindung nicht als Kühlmittelkanal ausgebildet, sondern besitzt eine wesentlich geringere Breite. Der Arbeitsspalt (18) befindet sich allenfalls zwischen die Kühlmittelkanäle begrenzenden Stegen. Grundsätzlich ist es im Rahmen der Erfindung möglich, dass nur Teilbereiche der Kokillenplatte (1)/ des Kokillenrohrs klemmungsfrei im Sinne der Erfindung miteinander verbunden sind, um in Teilbereichen, in denen eine besonders hohe thermische Beanspruchung zu erwarten ist, Relativbewegungen zu ermöglichen, während in anderen Teilbereichen der Kokillenplatte (1)/ des Kokillenrohrs eine andere Befestigungsart gewählt wird. Auf diese Weise ist es auch möglich, ein Festlager oder einen Festlagerbereich mit hoher Verbindungssteifigkeit zwischen Kokillenplatte (1)/ dem Kokillenrohr und Stützkonstruktion (2) bzw. ein Loslager oder einen Loslagerbereich mit niedriger Verwindungssteifigkeit zu schaffen. Ausgehend von einem Anbindungsbereich höherer Steifigkeit kann eine thermisch bedingte Ausdehnung der Kokillenplatte (1)/des Kokillenrohrs in Bereichen erfolgen, die geringe Reibwerte aufweisen oder sogar klemmfrei miteinander verbunden sind, so wie es im Rahmen der Erfindung vorgeschlagen wird.

Die Erfindung wird nachfolgend anhand von in Zeichnungen dargestellten Ausführungsbeispielen näher erläutert. Es zeigen:
- Figuren 1 und 2: einen Querschnitt durch eine Stützplatte (2) und eine Kokillenplatte (1) im Bereich einer Schraubverbindung, wobei die Kokillenplatte (1) zwei unterschiedliche Relativlagen gegenüber der Stützplatte (2) einnimmt;
- Figur 3: einen Schnitt durch eine Kokillenplatte (1) und eine Stützplatte (2) im Bereich einer Schraubbefestigung in einer zweiten Ausführungsform und
- Figur 4: einen Schnitt durch eine Kokillenplatte (1) und eine Stützplatte (2) im Bereich einer Schraubbefestigung in einer dritten Ausführungsform.

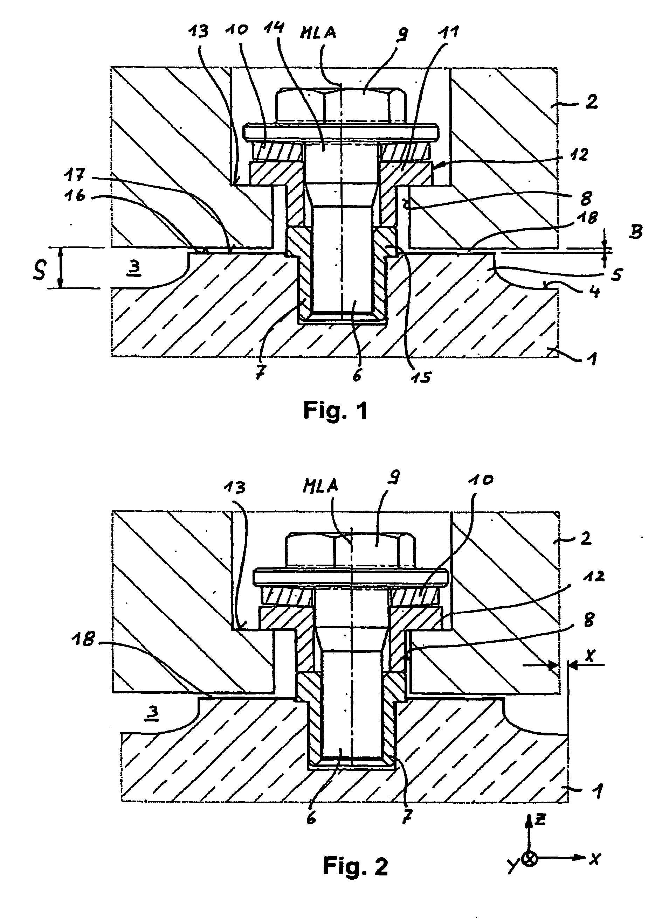

Figur 1 zeigt im Teilschnitt eine Kokillenplatte (1), die an einer Stützplatte (2) als Bestandteil einer Stützkonstruktion befestigt ist. Die Kokillenplatte (1) und die Stützplatte (2) bilden eine Platteneinheit einer nicht näher dargestellten flüssigkeitsgekühlten Kokille zum Stranggießen von Metallen. Die Kokillenplatte (1) besteht aus Kupfer oder einer Kupferlegierung, vorzugsweise mit einer Dehngrenze von größer 350 MPa. Zur Kühlung der Kokillenplatte (1) befindet sich zwischen der Stützplatte (2) und der Kokillenplatte (1) ein Kühlmittelspalt (3). Der Kühlmittelspalt (3) befindet sich in der Kokillenplatte (1) und ist hinsichtlich seiner Breite S durch die Höhe von inselartig auf der Kühlmittelseite (4) der Kokillenplatte (1) vorstehende Plateausockel (5) bestimmt. Die Plateausockel (5) können eine stromlinienförmige Gestalt besitzen und werden von dem Kühlmittel umströmt. In diesem Ausführungsbeispiel sind die Plateausockel (5) einstückig mit der Kokillenplatte (1) ausgebildet. In den dargestellten Plateausockel (5) der Kokillenplatte (1) greift ein Befestigungsbolzen (6) ein. Hierzu ist in dem Plateausockel (5) ein Gewindeeinsatz (7) verankert, in den der Befestigungsbolzen (6) eingeschraubt ist.

Der Befestigungsbolzen (6) durchsetzt eine Durchgangsbohrung (8) in der Stützplatte (2). Der als Außensechskant gestaltete Bolzenkopf (9) des Befestigungsbolzens (6) stützt sich über eine Spannscheibe (10) und einen Kragen (11) einer Klemmhülse (12) an einer rückwärtigen Anschlagfläche (13) der Stützplatte (2) ab. Die Klemmhülse (12) erstreckt sich in die Durchgangsbohrung (8) hinein und wird durch den Schaft (14) des Schraubbolzens zentriert. Sie ist auf einem Ringabschnitt (15) des Gewindeeinsatzes (7) abgestützt. Der Ringabschnitt (15) ragt in diesem Ausführungsbeispiel ebenfalls in die Durchgangsbohrung (8) hinein. Die sich in Richtung der Mittellängsachse MLA der Durchgangsbohrung (8) bzw. des Befestigungsbolzens (6) erstreckende Länge des Ringabschnitts (15), der Klemmhülse (12) und der Spannscheibe (10) ist derart bemessen, dass zwischen den einander zugewandten Oberflächen (16, 17) der Stützplatte (2) und der Kokillenplatte (1) ein Arbeitsspalt (18) geringer Breite B verbleibt. Die Kokillenplatte (1) liegt im Bereich dieser Schraubbefestigung nicht an der Stützplatte (2) an.

Figur 2 zeigt den Teilschnitt der Figur 1, wobei die Kokillenplatte (1) gegenüber der Stützplatte (2) lateral verlagert worden ist. Hierbei ist die Breite B des Arbeitsspalts (18) gleich geblieben. Die Verlagerung erfolgt um einen Betrag X entsprechend der X-Richtung in dem eingezeichneten kartesischen Koordinatensystem. In gleicher Weise ist eine Verlagerung in Y-Richtung möglich, wobei der Grad der Verlagerung durch das Übermaß der Durchgangsbohrung (8) bestimmt ist. Die Z-Richtung entspricht einer Verlagerung der Kokillenplatte (1) in Richtung auf die Stützkonstruktion bzw. die Stützplatte (2), das heißt in Richtung der Mittellängsachse MLA des Befestigungsbolzens (6). Die Verlagerung in Z-Richtung soll durch schmale Arbeitsspalte so gering wie möglich gehalten werden und ist kleiner als die Verlagerung in X- und Y-Richtung.

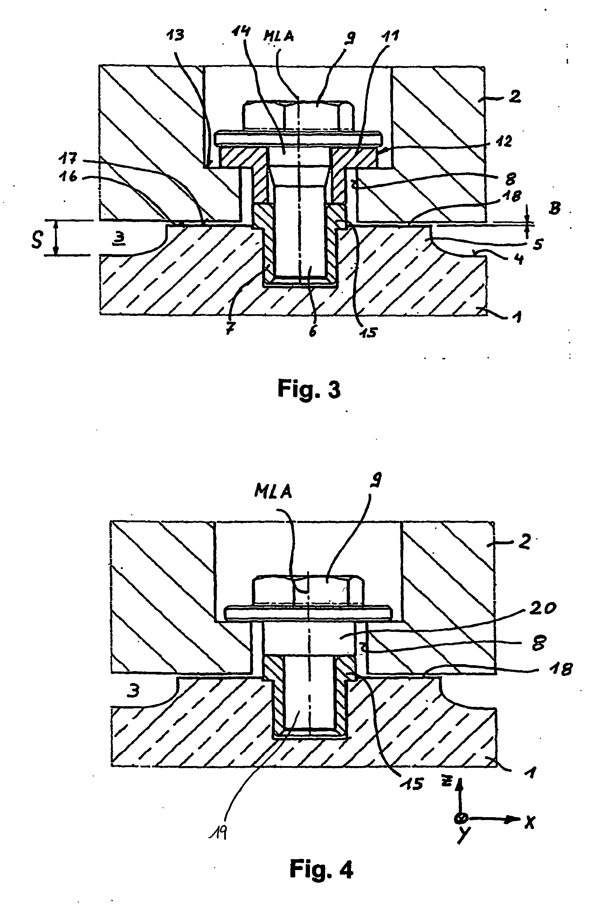

Die Ausführungsform der Figur 3 unterscheidet sich von derjenigen der Figuren 1 und 2 dadurch, dass ein Spannring nicht vorgesehen ist und der Bolzenkopf (9) somit unmittelbar auf dem Kragen (11) der Klemmhülse (12) abgestützt ist. Der Schaft (14) des Schraubbolzens (6) ist entsprechend kürzer ausgeführt.

Die Ausführungsform der Figur 4 unterscheidet sich von derjenigen der Figur 1 durch einen andersartig gestalteten Befestigungsbolzen (19). Dieser Befestigungsbolzen (19) besitzt einen in die Durchgangsbohrung (8) hinein ragenden zylindrischen Schaft (20), der gewissermaßen als Klemmhülse fungiert. Der Schaft (20) ist in seiner Länge so bemessen, dass er bei eingeschraubtem Befestigungsbolzen (19) unmittelbar an dem Ringabschnitt (15) des Gewindeeinsatzes (7) anliegt. Auf diese Weise entfallen einerseits die Spannscheibe (10) und andererseits die Klemmhülse (12). Eine Montage ist sehr schnell und einfach möglich. Die Teilevielfalt ist reduziert. Auch bei dieser Ausführungsform ist der Außendurchmesser des Schafts (20) kleiner gewählt als der Innendurchmesser der Durchgangsbohrung (8), um sowohl eine laterale Verlagerung der Kokillenplatte (1) gegenüber der Stützplatte (2) in X- und Y-Richtung zu ermöglichen. Die Breite B des Arbeitsspalts (18) wird durch die längenmäßige Abstimmung des Ringabschnitts (15), des Schafts (20) und der Länge der Durchgangsbohrung (8) bestimmt und exakt definiert.

### Bezugszeichen:

1-Kokillenplatte
2-Stützplatte
3-Kühlmittelspalt
4-Kühlmittelseite
5-Plateausockel
6-Befestigungsbolzen
7-Gewindeeinsatz
8-Durchgangsbohrung in 2
9-Bolzenkopf
10-Federelement (Spannscheibe)
11-Kragen
12-Klemmhülse
13-Anschlagfläche
14-Schaft v. 6
15-Ringabschnitt v. 7
16-Oberfläche v. 2
17-Oberfläche v. 1
18-Arbeitsspalt
19-Befestigungsbolzen
20-Schaft v. 19

MLA - Mittellängsachse v. 6, 20
B - Breite v. 18
S - Breite v. 3

## Patentansprüche

1. Flüssigkeitsgekühlte Kokille zum Stranggießen von Metallen, umfassend Kokillenplatten (1) oder ein Kokillenrohr aus Kupfer oder einer Kupferlegierung, die/das derart mittels Befestigungsbolzen (6, 19) mit einer Stützkonstruktion (2) verbunden sind, dass zwischen der Stützkonstruktion (2) und den Kokillenplatten (1) oder dem Rohr insgesamt ein Arbeitsspalt (18) vorhanden ist, wobei die Durchgangsbohrungen für die Befestigungsbolzen (6, 19) in der Stützkonstruktion (2) überdimensioniert sind **dadurch gekennzeichnet, dass** die Befestigungsbolzen (6, 19) entweder
a. in die Kokillenplatten (1) oder das Kokillenrohr einschraubbare Schraubbolzen sind, wobei die Einschraubtiefe durch eine Klemmhülse (12) begrenzt ist, die zwischen einem Bolzenkopf (9) der Schraubbolzen und der Kokillenplatte (1) bzw. dem Kokillenrohr verspannt ist
oder
b. wobei die Befestigungsbolzen (6,19) lösbar an einer Kokillenplatte (1) oder einem Kokillenrohr befestigte Gewindebolzen sind, die mit Muttern gesichert werden, wobei die Muttern bis zu einem einen Arbeitsspalt (18) ausbildenden Abstand zur Kokillenplatte (1)/ dem Kokillenrohr auf die Gewindebolzen schraubbar sind, wobei der Abstand durch eine zwischen der Kokillenplatte (1)/ dem Kokillenrohr und der Mutter verspannte Klemmhülse (12) definiert ist
oder
c. wobei die Befestigungsbolzen (6,19) lösbar an einer Kokillenplatte (1) oder einem Kokillenrohr befestigte Gewindebolzen sind, die mit Muttern gesichert werden, wobei die Muttern bis zu einem einen Arbeitsspalt (18) ausbildenden Abstand zur Kokillenplatte (1)/dem Kokillenrohr auf die Gewindebolzen schraubbar sind, wobei die Muttern bis zu einem umlaufenden Kragen des Gewindebolzens auf den Gewindebolzen aufschraubbar sind.

2. Kokille nach Anspruch 1, **dadurch gekennzeichnet, dass** die Klemmhülsen (12) einstückige Bestandteile der Muttern sind.

3. Kokille nach Anspruch 1 oder 2, **dadurch gekennzeichnet, dass** sich der Arbeitsspalt (18) zwischen den einander zugewandten Oberflächen (16, 17) der Kokillenplatte (1) oder dem Kokillenrohr und der Stützkonstruktion (2) befindet.

4. Kokille nach einem der Ansprüche 1 bis 3, **dadurch gekennzeichnet, dass** die Breite (B) des Arbeitsspalts (18) kleiner ist als 0,2 mm.

5. Kokille nach einem der Ansprüche 1 bis 4, **dadurch gekennzeichnet, dass** der Schraubbolzen (6) in einen Gewindeeinsatz (7) in der Kokillenplatte (1) oder das Kokillenrohr eingeschraubt ist, wobei die Klemmhülse (12) an dem Gewindeeinsatz (7) abgestützt ist.

6. Kokille nach einem der Ansprüche 1 bis 5, **dadurch gekennzeichnet, dass** zwischen der Klemmhülse (12) und der Mutter oder dem Bolzenkopf (9) ein Federelement (10) angeordnet ist.

## Claims

1. Liquid-cooled mould for the continuous casting of metals, comprising mould plates (1) or a mould tube made of copper or a copper alloy, which is/are connected by means of fastening bolts (6, 19) to the support structure (2) in such a way that a working gap (18) is present between the support structure (2) and the mould plates (1) or the tube as a whole, wherein the through-bores for the fastening bolts (6, 19) in the support structure (2) have an excess dimension, **characterised in that** the fastening bolts (6, 19) are either
a. screw bolts which can be screwed into the mould plates (1) or the mould tube, the screw-in depth being limited by a clamping sleeve (12) which is braced between a bolt head (9) of the screw bolts and the mould plate (1) or the mould tube
or
b. wherein the fastening bolts (6, 19) are threaded bolts detachably fastened to a mould plate (1) or a mould tube, which are secured by nuts, it being possible to screw the nuts onto the threaded bolts up to a distance forming a working gap (18) from the mould plate (1)/the mould tube, the distance being defined by a clamping sleeve (12) braced between the mould plate (1)/the mould tube and the nut
or
c. wherein the fastening bolts (6, 19) are threaded bolts detachably fastened to a mould plate (1) or a mould tube, which are secured with nuts, it being possible to screw the nuts onto the threaded bolts up to a distance forming a working gap (18) from the mould plate (1)/the mould tube, wherein the nuts can be screwed onto the threaded bolt up to a peripheral collar of the threaded bolt.

2. Mould according to claim 1, **characterised in that** the clamping sleeves (12) are integral components of the nuts.

3. Mould according to claim 1 or 2, **characterised in that** the working gap (18) is situated between the mutually facing surfaces (16, 17) of the mould plate (1) or the mould tube and the support structure (2).

4. Mould according to any one of claims 1 to 3, **characterised in that** the width (B) of the working gap (18) is smaller than 0.2 mm.

5. Mould according to any one of claims 1 to 4, **characterised in that** the screw bolt (6) is screwed into a threaded insert (7) in the mould plate (1) or the mould tube, the clamping sleeve (12) being supported on the threaded insert (7).

6. Mould according to any one of claims 1 to 5, **characterised in that** a spring element (10) is arranged between the clamping sleeve (12) and the nut or the bolt head (9).

## Revendications

1. Lingotière de coulée continue à refroidissement par liquide pour la coulée continue de métaux, comportant des plaques de lingotière (1) ou un tube de lingotière en cuivre ou en un alliage de cuivre relié(s) au moyen de boulons de fixation (6, 19) à un élément d'appui (2) de sorte qu'il y ait une fente de travail (18) entre l'élément d'appui (2) et les plaques de lingotière (1) ou le tube de lingotière, les perçages traversant pour les boulons de fixation (6, 19) étant surdimensionnés, dans l'élément d'appui (2),
**caractérisée en ce que**
a. les boulons de fixation (6, 19) sont constitués par des vis pouvant être vissées dans les plaques de lingotière (1) ou le tube de lingotière, la profondeur de vissage étant limitée par une douille de serrage (12) qui est bloquée entre la tête (9) des vis et la plaque de lingotière (1) ou le tube de lingotière,
ou
b. les boulons de fixation (6, 19) sont constitués par des boulons filetés fixés de manière amovible à une plaque de lingotière (1) ou un tube de lingotière, et qui sont bloqués par des écrous, ces écrous pouvant être vissés sur les boulons filetés jusqu'à une distance de la plaque de lingotière (1)/ du tube de lingotière formant une fente de travail (18), cette distance étant définie par une douille de serrage (12) bloqué entre la plaque de lingotière (1)/ le tube de lingotière et l'écrou,
ou
c. les boulons de fixation (6, 19) sont constitués par des boulons filetés fixés de manière amovible à une plaque de lingotière (1) ou un tube de lingotière, et qui sont bloqués par des écrous, ces écrous pouvant être vissés sur les boulons filetés jusqu'à une distance de la plaque de lingotière (1)/ du tube de lingotière formant une fente de travail (18), ces écrous pouvant être vissés sur les boulons filetés jusqu'à une collerette périphérique de ces boulons.

2. Lingotière selon la revendication 1,
**caractérisée en ce que**
les douilles de serrage (12) font corps avec les écrous.

3. Lingotière selon la revendication 1 ou 2,
**caractérisée en ce que**
la fente de travail (18) est située entre les surfaces (16, 17) qui se font face de la plaque de lingotière (1) ou du tube de lingotière et de l'élément d'appui (2).

4. Lingotière selon l'une des revendications 1 à 3,
**caractérisée en ce que**
la largeur (B) de la fente de travail (18) est inférieure à 0,2 mm.

5. Lingotière selon l'une des revendications 1 à 4,
**caractérisée en ce que**
les vis (6) sont vissés dans un insert taraudé (7) de la plaque de lingotière (1) ou du tube de lingotière, la douille de serrage (12) s'appuyant contre cet insert taraudé (7).

6. Lingotière selon les revendications 1 à 5,
**caractérisée en ce qu'**
un élément élastique (10) est monté entre la douille de serrage (12) et l'écrou ou la tête de vis (9).
